Europäisches Patentamt

European Patent Office

Office européen des brevets

(11) Publication number: **0 306 289 B1**

(19)

(12) **EUROPEAN PATENT SPECIFICATION**

(45) Date of publication of patent specification: **08.07.92**   (51) Int. Cl.⁵: **G01N 1/24**

(21) Application number: **88308050.9**

(22) Date of filing: **31.08.88**

(54) **Devices for sealing and isolating analyser gas sample flow.**

(30) Priority: **03.09.87 US 92495**

(43) Date of publication of application:
**08.03.89 Bulletin  89/10**

(45) Publication of the grant of the patent:
**08.07.92 Bulletin  92/28**

(84) Designated Contracting States:
**DE FR GB IT NL**

(56) References cited:
**JP-A-53 121 222**
**US-A- 3 794 066**
**US-A- 3 960 500**

(73) Proprietor: **INTERNATIONAL CONTROL AUTO-
MATION FINANCE S.A.**
**16 Rue des Bains**
**Ville de Luxembourg(LU)**

(72) Inventor: **Barnett, Daniel C.**
**10100 Chipmunk Ridge**
**Concord Township Ohio 44077(US)**
Inventor: **Hall, George Robert II**
**1917 Robindale Street**
**Wickliffe Ohio 44092(US)**

(74) Representative: **Pilch, Adam John Michael et
al**
**D. YOUNG & CO. 10 Staple Inn**
**London WC1V 7RD(GB)**

EP 0 306 289 B1

## Description

This invention relates to devices for sealing and isolating analyser gas sample flow in systems having aspirators.

The control of combustion systems is often dependent upon the accurate monitoring and analysing of process gases such as combustion flue gases. Known sampling systems for measuring concentrations of oxygen, carbon monoxide and other combustibles include forced or pressurised type systems, and aspirated or vacuum type systems. In pressurised systems, small amounts of leakage between the system and the environment are not critical as leakage is vented to atmosphere due to the higher sampling system pressure. In aspirated systems, however, leakage between the sampling system and environment or supply air and sampled gas channels causes the higher pressure air to flow into the sampled gas. This inflow of air increases the oxygen content of the sample and thereby results in an erroneous measurement.

The aspirators in one known arrangement, such as that disclosed in US-A-4 134 289, as well as the various inlet and outlet lines associated therewith, are all enclosed in a heated block to maintain the temperature well above the dew point of any sampled gases or supply air in order to prevent condensation. In the case of such high temperature analysing, in which temperatures may exceed 450°F (232°C), metal, ceramic and asbestos materials are employed to form analyser block parts. Reference is directed to US-A-4 134 289 for further details of this arrangement.

The formation of fluid flow passages in the block, particularly serpentine sinusoidally extending channels used to assure sufficient residence time to heat the fluid flows, can be facilitated by machining or otherwise forming surface grooves in a sealing face of a flat plate, such as a manifold flange, and joining the flange together with a seal plate or the like so that the adjacent surfaces establish distinct, separate flow paths. To assure adequate sealing between mating parts, however, such parts must be machined to close tolerances, be formed with microsmooth finishes and precision flatness, and then be joined under high clamping loads uniformly distributed over the mated surfaces. In operation small leakages may nevertheless occur due to deviations from design specifications, or imperfections in the sealing surfaces such as scratches or burrs, or dirt or particles which will sometimes get between the sealing surfaces, or even due to thermal distortion.

According to the present invention there is provided a device for sealing and isolating analyser gas sample flow in a system having an aspirator, the aspirator having gas sample inlet means for drawing a sample gas flow therein and supply air inlet means, and wherein the device comprises: a plurality of plate members joined together into a rigid structure, the plate members having sealing surfaces, at least one of the plate members including flow channel means formed in the respective sealing surface for passing fluid flow along the sealing surface, the flow channel means including an air supply passage for passing air to the supply air inlet means of the aspirator, the flow channel means further including a sample gas passage for passing gas to be sampled to the gas sample inlet means of the aspirator, at least a portion of the air supply passage and a portion of the sample gas passage being formed on the sealing surface at locations spaced from each other, and the flow channel means further including at least one drain passage on said sealing surface surrounding said portion of the sample gas passage; at least one of the plate members including a cavity; at least one of the plate members including restrictive passage means in fluid communication between said at least one drain passage and the cavity to provide a pressure drop for fluid passing from said at least one drain passage to the cavity; and outlet means for exhausting fluid from the cavity to the atmosphere.

An embodiment of the present invention provides a device for sealing and isolating analyser gas sample flow, the device including a flange manifold which is provided with a drain channel circuit interposed on the sealing face between a supply air flow channel to the aspirator and sample air flow inlets or flow passages; the drain channel circuit intercepts any leakage passing from the higher pressure air supply towards the sample air flow inlets, the drain channel circuit being connected to large cavities that, in turn, are vented to atmosphere. The drain channel circuit is sized so as to reduce the high air supply pressure to zero.

A device according to a preferred embodiment of the invention (to be described in greater detail hereinafter) advantageously accommodates leakage while protecting the integrity of a gas sample being analysed.

From JP-A-53.12 1222 a fluid flow passage plate is known which, to detect leakage in each fluid flow passage or between flow passages, has leakage detecting grooves between flow passages of which both ends are opened onto base plate end surface or base plate top surface. US-A-3794066 discloses a hydraulic control apparatus comprising a plurality of multiple function conduit modes. The apparatus has leakage collection zones at the interfaces of adjacent modules and between an inner high pressure and an outer low pressure seal and a common drain passage through said adjacent modules leading to reservoir.

The invention will now be described, by way of illustrative and non-limiting example, with reference to the accompanying drawings, in which like reference numerals designate like or corresponding parts, and in which:

Figure 1 is a flow diagram which schematically illustrates aspirated flow paths of a gas analyser and means for isolating the aspirated flow paths from leakage from the supply air flow path and ambient air in accordance with an embodiment of the invention;

Figure 2 is an enlarged schematic sectional view illustrating the isolation of the sample gas inlets from the air supply passage at the same plane of the sealing surface and the communication of the sample gas and air supply passage with the aspirator in accordance with another embodiment; and

Figure 3 is a perspective view of a flange manifold embodying the invention.

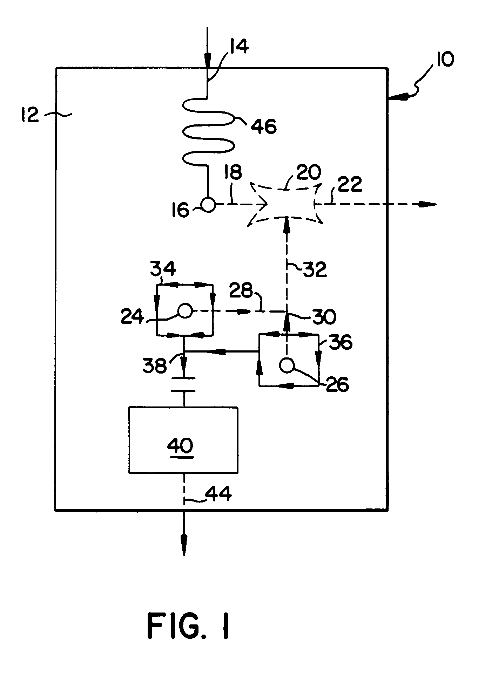

Referring to the drawings in detail, Figure 1 provides a schematic illustration of the flow paths of an aspirated analyser block embodying the principles of the invention.

In Figure 1, a flange manifold plate 10 is provided with a sealing face 12 having a series of flow paths or channels for conducting fluid therealong. A first flow channel 14 formed in the sealing face 12 provides a pathway for the passage of supply air along the surface of the sealing face to an opening 16 which communicates with a subsurface channel 18 formed within the flange manifold plate 10 below the surface of the sealing face 12. The subsurface channel 18, in turn, communicates with the drive inlet connection of an aspirator 20. The aspirator 20 includes a discharge outlet channel 22.

Two sample gas inlet openings 24, 26 are provided at the sealing face 12. The sample gas inlet openings 24, 26 communicate with two respective subsurface flow channels 28, 30. The subsurface flow channels 28, 30 communicate with one or more inlets 32 (only one of which is shown in Figure 1) to the aspirator 20.

The channel means formed within the surface of the sealing face 12 further include drain passage channels 34, 36 which surround the sample gas inlet openings 24, 26. The drain passage channels communicate with a restricted flow channel 38 which in turn discharges into a cavity 40 formed within the sealing face 12. The cavity 40 is connected to a vent channel 44 which is designed to discharge to atmosphere via an opening in the edge of the flange manifold plate 10. The air supply first flow channel 14 includes a section 46 formed sinusoidally within the sealing face 12 to delay the transport time of supply air (in other words to extend the transport path) to the aspirator thereby to ensure that any air supply is properly heated by well-known means (not shown) to prevent condensation. It should be understood that the flow lines shown in Figure 1 in dotted form represent channels which are not formed in the surface of the sealing face 12 but are subsurface channels or components.

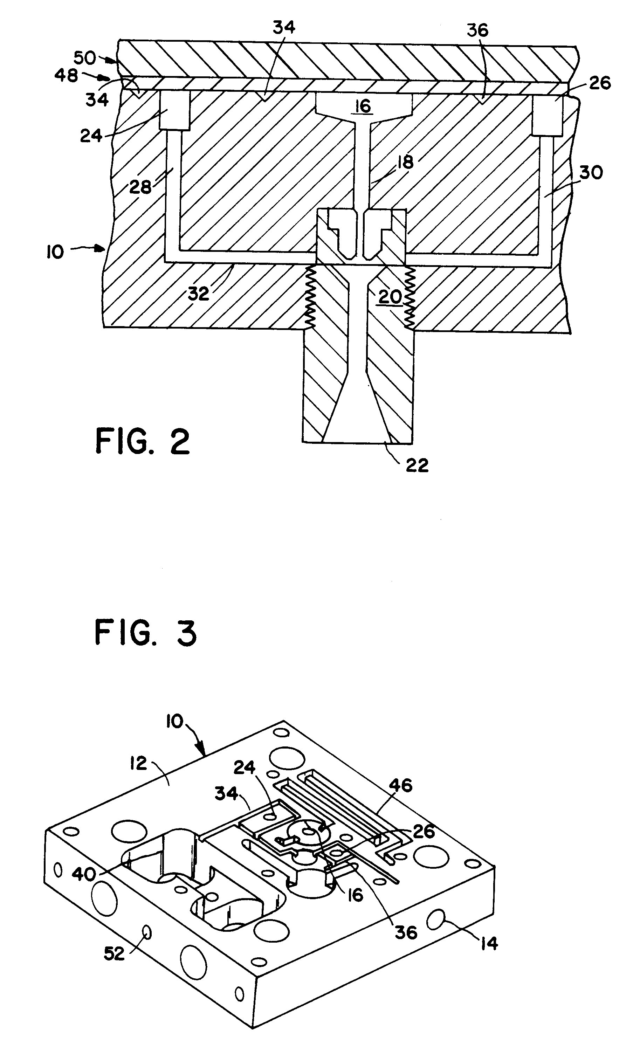

Figure 2 illustrates a schematic cross section of a portion of the flange manifold plate 10, a sealing plate 50 and a seal 48 joined together into a rigid structure by well-known means (not shown) such as by bolting the sealing plate 50 to the flange manifold plate 10 with the seal 48 interposed therebetween. The seal 48 can be of the type of seal typically used for high temperature applications, for example, a crushed gasket composed of graphite.

Referring now to Figure 3, there is shown a perspective view of preferred embodiment of the flange manifold plate 10.

As best seen in Figures 2 and 3, the drain passage channels 34, 36 have V-shaped cross-sections and are open to the surface of the sealing face 12. The drain passage channels 34, 36 could alternatively be formed with a generally U-shaped cross-section. In the embodiment of Figure 3, the aspirator (not shown) is a separate component partially housed in the flange manifold plate 10 by being threadably engaged therewith.

In operation, supply air at a pressure of about 35 to 60 p.s.i.g. (241 to 414 kPa above atmospheric pressure) is provided to the aspirator 20 via the first flow channel 14 and the subsurface flow channel 18 to establish a negative pressure at the inlet 32 to induce a gas sample to flow under a negative pressure of up to 2.5 inch (63.5mm) $H_2O$ (vacuum) (623 Pa) to the aspirator 20 via the inlet 32 and through a gas analyser (not shown) such as an oxygen analyser or combustibles detector. The mixture of the sample gas and the supply air is discharged via the discharge outlet channel 22, typically back to the system.

In the event that the sealing face 12 is not fully sealed, for example, due to the problems referred to previously with reference to the prior proposed arrangements, air from the air supply source may tend to traverse the sealing face 12 and pass into one or more of the sample gas inlet openings 24, 26. However, since the inlet openings are surrounded by the drain passage channels 34, 36, the channels tend to intercept any such leakage flow and direct the flow to the cavity 40 via the restricted flow channel 38. The restricted flow channel 38 is sized so as to cause a full drop in supply air pressure to ambient pressure conditions as the intercepted air is passed to the cavity 40 and ultimately vented to atmosphere via the vent channel 44 and an outlet 52 formed along an external surface of the flange manifold plate 10.

Certain modifications may be made to the arrangements previously described. As an example, individual sample gas channels may be utilised to direct sample gas to the aspirator as shown in Figure 2 or the channels can be combined into a single line as schematically illustrated in Figure 1. In addition, separate drain channels can be provided for each of the sample gas inlets for direct communication with the cavity 40. Alternatively, more than one cavity can be utilised. Further, it may be possible to abut directly the sealing surface of the flange manifold plate with a surface of the sealing plate without the use of an intervening sealing gasket.

**Claims**

1. A device for sealing and isolating analyser gas sample flow in a system having an aspirator (20), the aspirator (20) having gas sample inlet means (32) for drawing a sample gas flow therein and supply air inlet means (18), and wherein the device comprises: a plurality of plate members (10, 50) joined together into a rigid structure, the plate members (10, 50) having sealing surfaces (12), at least one (10) of the plate members including flow channel means formed in the respective sealing surface (12) for passing fluid flow along the sealing surface (12), the flow channel means including an air supply passage (14) for passing air to the supply air inlet means (18) of the aspirator (20), the flow channel means further including a sample gas passage (24, 26, 28, 30) for passing gas to be sampled to the gas sample inlet means (32) of the aspirator (20), at least a portion (16, 46) of the air supply passage (14) and a portion (24, 26) of the sample gas passage (24, 26, 28, 30) being formed on the sealing surface (12) at locations spaced from each other, and the flow channel means further including at least one drain passage (34, 36) on said sealing surface (12) surrounding said portion of the sample gas passage (24, 26, 28, 30); at least one (10) of the plate members including a cavity (40); at least one (10) of the plate members including restrictive passage means (38) in fluid communication between said at least one drain passage (34, 36) and the cavity (40) to provide a pressure drop for fluid passing from said at least one drain passage (34, 36) to the cavity (40); and outlet means (52) for exhausting fluid from the cavity (40) to the atmosphere.

2. A device according to claim 1, wherein said portion of the sample gas passage (28) comprises an opening (24) in the sealing surface (12).

3. A device according to claim 1, wherein said portion of the sample gas passage comprises a plurality of openings (24, 26) in the sealing surface (12), and the drain passage includes two drain channels (34, 36), one of each of the two drain channels (34, 36) surrounding a respective one of the openings (24, 26).

4. A device according to claim 1, claim 2 or claim 3, wherein the drain passage(s) (34, 36) comprise(s) a V-shaped channel.

5. A device according to any one of the preceding claims, including seal means (48) for sealingly engaging the sealing surfaces (12) of the plate members (10, 50) together.

6. A device according to claim 5, wherein the seal means comprises a gasket (48) interposed between the sealing surfaces (12).

7. A device according to any one of the preceding claims, wherein the outlet means comprises an outlet (52) formed along an external surface of the plate member (10) which includes the flow channel means.

8. A device according to any one of the preceding claims, wherein only one (10) of the plate members includes the flow channel means.

**Revendications**

1. Dispositif pour rendre étanche et isoler un courant d'échantillon gazeux à analyser dans un système à aspirateur (20), l'aspirateur (20) ayant des moyens d'entrée d'échantillon gazeux pour y amener un écoulement d'échantillon gazeux et des moyens d'entrée d'air d'alimentation (18),
caractérisé en ce qu'il comprend une pluralité de plaques (10,50) jointes ensemble en une strucure rigide, les plaques (10,50) ayant des surfaces d'étanchement (12), au moins une (10) des plaques comprenant des moyens de conduit d'écoulement formés dans la surface d'étanchement respective (12) pour faire passer un écoulement de fluide le long de la surface d'étanchement (12), les moyens de conduit d'écoulement comprenant un passage d'alimentation en air (14) pour faire passer de l'air vers les moyens d'entrée d'air d'alimentation (18) de l'aspirateur (20), les moyens de conduit d'écoulement comprenant en plus un passage d'échantillon gazeux (24,26,28,30) pour faire passer du gaz à échantillonner vers les moyens d'entrée d'échantillon gazeux (32) de l'aspirateur (20), au moins une partie (16,46) du passage d'alimentation en air (14) et une partie (24,26) du passage d'échantillon gazeux (24,26,28,30) étant formé sur la surface d'étanchement (12) à des emplacements espacés l'un de l'autre, et les moyens de conduit d'écoulement comprenant de plus au moins un passage de purge (34,36) sur cette surface d'étanchement (12) entourant cette partie du passage d'échantillon gazeux (24,26,28,30), au moins une (10) des plaques comprenant une cavité (40); au moins une (10) des plaques comprenant un moyen de passage restrictif (38) dans la communication de fluide entre au moins un passage de purge (34,36) et la cavité (40) afin d'amener une chute de pression du fluide passant depuis au moins un passage de purge (34,36) jusqu'à la cavité (40); et des moyens de sortie (52) pour évacuer le fluide depuis la cavité (40) jusqu'à l'atmosphère.

2. Dispositif selon la revendication 1, caractérisé en ce que cette partie du passage d'échantillon gazeux (24,26,28,30) comprend un orifice (24) dans la surface d'étanchement (12).

3. Dispositif selon la revendication 1, caractérisé en ce que cette partie du passage d'échantillon gazeux comprend une pluralité d'orifices (24,26) dans la surface d'étanchement (12), et en ce que le passage de purge comprend deux conduits de purge (34,36), chacun de ces deux conduits de purge (34,36) entourant un orifice respectif des orifices (24,26).

4. Dispositif selon les revendications 1, 2, ou 3, caractérisé en ce que le(s) passage(s) de purge (34,36) comprend(nent) un conduit de profil en V.

5. Dispositif selon l'une des précédentes revendications, caractérisé en ce qu'il comprend des moyens de joint d'étanchéité (48) pour amener ensembles, de façon étanche, les surfaces d'étanchement (12) des plaques (10,50).

6. Dispositif selon la revendication 5, caractérisé en ce que le moyen de joint d'étanchéité comprend une garniture d'étanchéité (48) interposée entre les surfaces d'étanchement (12).

7. Dispositif selon l'une des précédentes revendications,

caractérisé en ce que le moyen de sortie comprend une sortie (52) formée le long d'une surface externe de la plaque (10) qui comprend les moyens de conduit d'écoulement.

8. Dispositif selon l'une des précédentes revendications, caractérisé en ce que seulement une (10) des plaques comprend les moyens de conduit d'écoulement.

## Patentansprüche

1. Vorrichtung zum Abdichten und Isolieren der Strömung einer Gasprobe eines Analysators in einem System mit einem Sauggebläse (20), wobei das Sauggebläse (20) eine Einlaßeinrichtung (32) für die Gasprobe hat, um einen Strom einer Gasprobe einzuziehen, sowie eine Einlaßeinrichtung (18) für Luftzugabe hat, und wobei die Vorrichtung aufweist: eine Mehrzahl von Plattenteilen (10, 50), die zu einem festen Aufbau miteinander verbunden sind, wobei die Plattenteile (10, 50) Dichtflächen (12) haben, zumindest eines (10) der Plattenteile eine Strömungskanaleinrichtung aufweist, die in der betreffenden Dichtfläche (12) ausgebildet ist, um einen Fluidstrom entlang der Dichtfläche (12) zu leiten, wobei die Strömungskanaleinrichtung einen Luftzufuhrdurchgang (14) hat, um Luft zu der Einlaßeinrichtung (18) für Luftzufuhr des Sauggebläses (20) hindurchzulassen, wobei der Strömungskanal weiterhin eine Einrichtung aufweist, die einen Probegasstrom (24, 26, 28, 30) einschließt, um Gas, das als Probe genommen werden soll, der Gasprobeneinlaßeinrichtung (32) des Sauggebläses (20) zuzuleiten, wobei zumindest ein Abschnitt (16, 46) des Luftzufuhrdurchganges (14) und ein Abschnitt (24, 26) des Probengasdurchganges (24, 26, 28, 30) an der Dichtfläche (12) an voneinander beabstandeten Stellen ausgebildet sind, und wobei die Strömungskanaleinrichtung weiterhin zumindest einen Ablaßdurchgang (34, 36) auf der Dichtungsfläche (12) aufweist, der den Abschnitt des Probengasdurchganges (24, 26, 30) umgibt, wobei zumindest eines (10) der Plattenteile eine Vertiefung (40) aufweist, zumindest eines (10) der Plattenteile eine eingeengte Durchgangseinrichtung (48) in der Fluidverbindung zwischen dem zumindest einen Ablaßdurchgang (34, 36) und der Vertiefung (40) aufweist, um einen Druckabfall für das Fluid vorzusehen, welches von dem zumindest einen Ablaßdurchgang (34, 36) zu der Vertiefung (40) hindurchtritt, und mit einer Auslaßeinrichtung (52), um Fluid aus der Vertiefung (40) an die Atmosphäre abzugeben.

2. Vorrichtung nach Anspruch 1, wobei der Abschnitt des Probengasdurchganges (28) eine Öffnung (24) in der Dichtfläche (12) aufweist.

3. Vorrichtung nach Anspruch 1, wobei der Abschnitt des Probengasdurchganges eine Mehrzahl von Öffnungen (24, 26) in der Dichtfläche (12) aufweist, und wobei der Ablaßdurchgang zumindest zwei Ablaßkanäle (34, 36) aufweist, wobei je einer der beiden Ablaßkanäle (34, 36) eine entsprechende Öffnung (24, 26) umgibt.

4. Vorrichtung nach Anspruch 1, 2 oder 3, wobei der Ablaßdurchgang (die Ablaßdurchgänge) (34, 36) einen V-förmigen Kanal aufweist (aufweisen).

5. Vorrichtung nach einem der vorstehenden Ansprüche einschließlich einer Dichtungseinrichtung (48), damit die Dichtflächen (12) der Plattenteile (10, 50) dicht miteinander in Eingriff treten.

6. Vorrichtung nach Anspruch 5, wobei die Dichtungseinrichtung eine Dichtung (48) aufweist, die zwischen den Dichtungsflächen (12) angeordnet ist.

7. Vorrichtung nach einem der vorstehenden Ansprüche, wobei die Auslaßeinrichtung einen Auslaß (52) aufweist, der entlang einer äußeren Oberfläche des Plattenteiles (10) ausgebildet ist, welches die Strömungskanaleinrichtung aufweist.

8. Vorrichtung nach einem der vorstehenden Ansprüche, wobei nur eines (10) der Plattenteile die Strömungskanaleinrichtung aufweist.

FIG. I

FIG. 2

FIG. 3